# EUROPÄISCHE PATENTANMELDUNG

(11) **EP 2 876 322 A2**
(43) Veröffentlichungstag der Anmeldung: **27.05.2015**
(21) Anmeldenummer: 14190887.1
(22) Anmeldetag: 29.10.2014
(51) Int. Cl.: F16D 25/08, F16D 23/14, F16D 48/02, F16D 23/12

(54) **Ausrückvorrichtung**

(30) Priorität: 22.11.2013 DE 102013223871; 14.04.2014 DE 102014207079
(71) Anmelder: Schaeffler Technologies AG & Co. KG, 91074 Herzogenaurach (DE)
(72) Erfinder: Guldenschuh, Dominik, 79115 Freiburg (DE)

(57) **Zusammenfassung**

Die Erfindung betrifft eine Ausrückvorrichtung mit einem axial verlagerbaren Ausrücklager insbesondere zur Beaufschlagung eines Betätigungselements einer Kupplung, wobei das Ausrücklager einen ersten Lagerring und einen zweiten Lagerring aufweist, wobei der erste Lagerring zur Beaufschlagung des Betätigungselements dient und der zweite Lagerring zur axialen Verlagerung des Ausrücklagers von einem ersten Betätigungsmittel und von einem zweiten Betätigungsmittel beaufschlagbar ist, wobei die beiden Betätigungsmittel unabhängig voneinander ansteuerbar sind.

## Beschreibung

Die Erfindung betrifft eine Ausrückvorrichtung, insbesondere zum Ausrücken einer Kupplung.

Ausrückvorrichtungen sind im Stand der Technik in verschiedenen Bauformen bekannt geworden. Dabei werden heute Ausrückvorrichtungen für Kupplungen eingesetzt, die durch ein verlagerbares Ausrücklager auf- oder zugedrückt werden. Im Stand der Technik sind hydraulisch betätigte Ausrückvorrichtungen oder mechanisch betätigte Ausrückvorrichtungen bekannt.

Bei hydraulisch betätigbaren Ausrückvorrichtungen weist die Vorrichtung einen Nehmerzylinder auf, welcher mit einer Fluidleitung mit einem Geberzylinder oder einer Hydraulikpumpe verbindbar ist. Daher wird auf das Nehmer- und Geber-System verwiesen, es kann statt Geberzylinder aber auch immer eine Pumpe vorhanden sein. Durch ein Betätigen eines Kupplungspedals wird der Kolben des Kupplungsgeberzylinders eingefahren, wodurch das in dem Geberzylinder und in dem restlichen System vorhandene Fluid durch das Leitungssystem gedrückt wird und somit ein Ausfahren des Kolbens des Kupplungsnehmerzylinders bewirkt wird. Der Kolben des Kupplungsnehmerzylinders drückt somit mit dem vorgesehenen insbesondere integrierten Ausrücklager auf die Tellerfeder der Kupplung. Durch diesen Vorgang wird die Kupplung aus- oder eingerückt bzw. geöffnet oder geschlossen und der Kraftfluss zwischen Motor und Getriebe wird dadurch unterbrochen oder hergestellt. Durch die Unterbrechung des Kraftflusses ist beispielsweise das Einlegen einer anderen Gangstufe oder der Neutralstellung im Getriebe möglich. Nach dem Einlegen der gewünschten Gangstufe kann der Fahrer das Kupplungspedal entlasten und es somit zurück in seine Ausgangsposition fahren lassen. Sobald der Fahrer den Druck auf das Pedal reduziert, kann durch den Gegendruck der in der Kupplung verbauten Tellerfeder das Ausrücklager und somit der Kolben des Kupplungsnehmerzylinders zurück in die Ausgangsposition gedrückt werden. Durch diesen Vorgang wird der Druck der Tellerfeder durch das im System vorhandene Fluid auf den Kolben des Kupplungsgeberzylinders übertragen. Dadurch fährt dieser ebenfalls gleichzeitig in seine Ausgangsposition zurück und drückt dadurch das Kupplungspedal in seine Ausgangstellung.

Durch diese Vorrichtungen nach dem Stand der Technik ergeben sich in manchen Fahrsituationen Komfortnachteile für den Fahrer des Fahrzeugs. Bei einem vergleichbaren Automatikgetriebefahrzeug muss der Fahrer nur den Fuß von der Bremse nehmen, damit das Fahrzeug anrollt und die Bremse wieder betätigen, damit das Fahrzeug wieder zum Stillstand kommt. Bei einem Fahrzeug mit Schaltgetriebe muss zusätzlich die Kupplung bei jedem Anfahren bzw. Anhalten manuell, also per Fuß, ein- oder ausgerückt werden. So muss zum Beispiel in Stausituationen bei ständigem "stop and go"-Verkehr die Kupplung immer wieder manuell betätigt werden, um mit dem Fahrzeug ein Stück weiter fahren zu können. Auch das Anfahren an bergaufführenden Fahrbahnabschnitten wird durch das manuelle Betätigen der Kupplung im Vergleich zu einem Automatikgetriebefahrzeug erschwert. Hier wird ein gewisses "Spiel" mit der Kupplung sowie eine gewisse Gaspedalanforderung an den Motor benötigt, um ruckfrei und flüssig anfahren zu können.

Es ist die Aufgabe der Erfindung, eine Ausrückvorrichtung zu schaffen, welche es erlaubt, dass die oben genannten Komfortnachteile zumindest teilweise kompensiert werden können.

Die Aufgabe der Erfindung wird mit den Merkmalen von Anspruch 1 gelöst.

Ein Ausführungsbeispiel der Erfindung betrifft eine Ausrückvorrichtung mit einem axial verlagerbaren Ausrücklager insbesondere zur Beaufschlagung eines Betätigungselements einer Kupplung, wobei das Ausrücklager einen ersten Lagerring und einen zweiten Lagerring aufweist, wobei der erste Lagerring zur Beaufschlagung des Betätigungselements dient und der zweite Lagerring zur axialen Verlagerung des Ausrücklagers von einem ersten Betätigungsmittel und von einem zweiten Betätigungsmittel beaufschlagbar ist, wobei die beiden Betätigungsmittel unabhängig voneinander ansteuerbar sind. Dadurch wird erreicht, dass das Ausrücklager von zwei Betätigungsmitteln unabhängig voneinander betätigbar ist, wobei ein Betätigungsmittel beispielsweise pedalbetätigt betätigbar ist und das andere Betätigungsmittel automatisierbar mittels eines Aktuators betätigbar ist. So kann bei einem beispielsweisen "stop and go"-Verkehr die Betätigung automatisierbar erfolgen, so dass der Fahrer nicht ständig selbst eingreifen/kuppeln muss.

Die Erfindung betrifft entsprechend eine hydraulische Ausrückvorrichtung insbesondere für ein manuell betätigbares Schaltgetriebe mit einem Geberzylinder, Nehmerzylinder und hydraulischer Strecke. Die Ausrückvorrichtung umfasst dabei den Nehmerzylinder des Systems. Um den Komfort zu erhöhen wird vorgeschlagen, den Nehmerzylinder als ein erstes Betätigungsmittel mit einem zusätzlichen unabhängigen Betätigungsmittel zu versehen zur automatischen Kupplungsbetätigung. Die Kupplungsbetätigung kann dann in einem Automatikmodus mittels des zweiten Betätigungsmittels erfolgen.

Erfindungsgemäß ist es vorteilhaft, wenn das erste Betätigungsmittel eine erste Kolben-Zylindereinheit ist, welche einen Zylinder aufweist, in welchem ein axial verlagerbarer Kolben aufgenommen ist, wobei der zweite Lagerring mittels des Kolbens der ersten Kolben-Zylindereinheit beaufschlagbar ist. So kann eine hydraulische Betätigung des Ausrücklagers beispielsweise mittels eines Fußpedals erfolgen.

Auch ist es vorteilhaft, wenn das zweite Betätigungsmittel eine zweite Kolben-Zylindereinheit ist, welche einen Zylinder aufweist, in welchem ein axial verlagerbarer Kolben aufgenommen ist, wobei der zweite Lagerring mittels des Kolbens der zweiten Kolben-Zylindereinheit beaufschlagbar ist. So kann zusätzlich zu der Betätigung mittels des ersten Betätigungsmittels eine zusätzliche oder alternative Betätigung mittels eines weiteren Betätigungsmittels erfolgen. Dies ist bevorzugt eine automatisierte Betätigung, die ebenso hydraulisch angesteuert wird. Dazu kann ein hydraulischer Betätigungsaktuator vorgesehen sein, welcher mit der zweiten Kolben-Zylindereinheit fluidverbunden ist.

Besonders vorteilhaft ist es, wenn die erste Kolben-Zylindereinheit und/oder die zweite Kolben-Zylindereinheit eine ringartige Kolben-Zylindereinheit ist, wobei der Zylinder und der im Zylinder angeordnete Kolben ringförmig ausgebildet sind. Entsprechend kann die Kolben-Zylindereinheit um eine Welle des Getriebes platziert werden, so dass das Ausrücklager und die Betätigungsmittel koaxial zur Getriebewelle angeordnet werden kann.

Dabei ist es vorteilhaft, wenn die erste Kolben-Zylindereinheit radial innerhalb oder radial außerhalb der zweiten Kolben-Zylindereinheit angeordnet ist. So kann eine platzsparende Gestaltung erreicht werden.

Auch ist es gemäß eines weiteren Erfindungsgedankens zweckmäßig, wenn das zweite Betätigungsmittel einen verschwenkbaren Hebel aufweist, welcher den zweiten Lagerring beaufschlagt.

Weiterhin ist es vorteilhaft, wenn der Hebel als einarmiger Hebel ausgebildet ist, wobei der Beaufschlagungsbereich zur Beaufschlagung des zweiten Lagerrings zwischen einem ersten Endbereich des Hebels und einem zweiten Endbereich des Hebels angeordnet ist, wobei der erste Endbereich der Lagerung des Hebels dient und der zweite Endbereich der Betätigung des Hebels mittels eines Aktuators dient.

Auch ist es zweckmäßig, wenn der Hebel als zweiarmiger Hebel ausgebildet ist, wobei der Beaufschlagungsbereich zur Beaufschlagung des zweiten Lagerrings an einem ersten Endbereich des Hebels angeordnet ist und ein zweiter Endbereich des Hebels vorgesehen ist, welcher der Betätigung des Hebels mittels eines Aktuators dient, wobei ein Bereich zwischen dem ersten Endbereich und dem zweiten Endbereich der Lagerung des Hebels dient.

Weiterhin ist es vorteilhaft, wenn die Lagerung des Hebels auf einer Plattform vorgenommen ist, welche mit dem Zylinder der ersten Kolben-Zylindereinheit verbunden ist.

Weiterhin ist es gemäß eines weiteren Erfindungsgedankens vorteilhaft, wenn das zweite Betätigungsmittel eine Rampenanordnung mit zwei relativ zueinander verdrehbaren Rampenelementen aufweist, wobei bei Relativverdrehung der Rampenelemente eines der Rampenelemente in axialer Richtung verlagerbar ist zur Beaufschlagung des zweiten Lagerrings.

Dabei ist es vorteilhaft, wenn die Rampenanordnung mit den beiden Rampenelementen ringartig ausgebildet ist.

Auch ist es vorteilhaft, wenn die erste Kolben-Zylindereinheit radial innerhalb oder radial außerhalb der Rampenanordnung angeordnet ist.

Bei einem Ausführungsbeispiel der Erfindung ist es zweckmäßig, wenn ein erstes Rampenelement und ein zweites Rampenelement vorgesehen sind, wobei eines der Rampenelemente U-förmig im Schnitt ausgebildet ist mit zwei beabstandeten Schenkeln, wobei das andere Rampenelement in radialer Richtung zwischen den Schenkeln angeordnet ist.

Auch ist es vorteilhaft, wenn ein erstes Rampenelement und ein zweites Rampenelement vorgesehen sind, wobei die Rampenelemente hohlzylindrisch ausgebildet sind und ineinander angeordnet sind, so dass sie an ihrer Innenfläche und Außenfläche Rampen aufweisen, welche sich aneinander abstützen.

Weiterhin ist es auch vorteilhaft, wenn eines der Rampenelemente mittels eines Seiles und eines Seilzugaktuators verdrehbar ist, wobei das Seil sich am Außenumfang des Seils anlegt und sich um das Rampenelement windet.

Die vorliegende Erfindung wird nachfolgend anhand bevorzugter Ausführungsbeispiele in Verbindung mit den zugehörigen Figuren näher erläutert:

Dabei zeigen:
- Fig. 1: eine perspektivische Ansicht einer Ausrückvorrichtung,
- Fig. 2: eine Ansicht der Ausrückvorrichtung nach Fig.1 im Schnitt, mit zwei Druckräumen, die separat voneinander betätigt werden können, jedoch das gleiche Lager betätigen.
- Fig. 3: eine Ansicht der Ausrückvorrichtung im Schnitt in einer ersten Betriebsstellung,
- Fig. 4: eine Ansicht der Ausrückvorrichtung im Schnitt in einer zweiten Betriebsstellung,
- Fig. 5: eine Ansicht einer weiteren über einen Hebel betätigbaren Ausrückvorrichtung,
- Fig. 6: eine Ansicht der über einen Druckraum betätigbaren Ausrückvorrichtung nach Figur 5 im Schnitt in einer ersten Betriebsstellung,
- Fig. 7: eine Ansicht der über einen Hebel betätigbaren Ausrückvorrichtung nach Figur 5 im Schnitt in einer zweiten Betriebsstellung,
- Fig. 8: die Ausrückvorrichtung im Einbau mit einer Kupplung,
- Fig. 9: eine Ansicht einer dritten Ausrückvorrichtung, die zusätzlich zur Hydraulik über eine Gabel oder Hebelaktuator betätigt wird,
- Fig. 10: eine Ansicht der über die Hydraulik betätigbaren Ausrückvorrichtung nach Figur 9 im Schnitt in einer ersten Betriebsstellung,
- Fig. 11: eine perspektivische Ansicht der Ausrückvorrichtung,
- Fig. 12: eine Ansicht der über die Gabel oder den Hebelaktuator betätigt Ausrückvorrichtung nach Figur 9 im Schnitt in einer zweiten Betriebsstellung,
- Fig. 13: eine Rampenvorrichtung mit Rampenkolben,
- Fig. 14: eine Rampenvorrichtung mit Rampenkolben verbaut,
- Fig. 15: eine Ansicht der Rampenvorrichtung im Zusammenbau ,
- Fig. 16: eine Ansicht der Ausrückvorrichtung nach Figur 15 im Schnitt in einer ersten Betriebsstellung über die Rampe betätigt,
- Fig. 17: eine Ansicht der über den Druckraum betätigbaren Ausrückvorrichtung nach Figur 15 im Schnitt in einer zweiten Betriebsstellung,
- Fig. 18: eine weitere Rampenvorrichtung in einer Teilansicht die andersartig geführt wird,
- Fig. 19: eine Rampenvorrichtung nach Fig. 18 in einer Explosionsdarstellung,
- Fig. 20: eine Ausrückvorrichtung in perspektivischer Darstellung,
- Fig. 21: die Ausrückvorrichtung nach Figur 20 im Schnitt,
- Fig. 22: die Ausrückvorrichtung nach Figur 20 Schnitt;
- Fig. 23: eine Ansicht einer Rampenvorrichtung,
- Fig. 24: eine Ansicht einer Rampenvorrichtung,
- Fig. 25: eine Ansicht einer Rampenvorrichtung,
- Fig. 26: eine Ansicht einer Rampenvorrichtung, und
- Fig. 27: eine Ansicht einer Rampenvorrichtung.

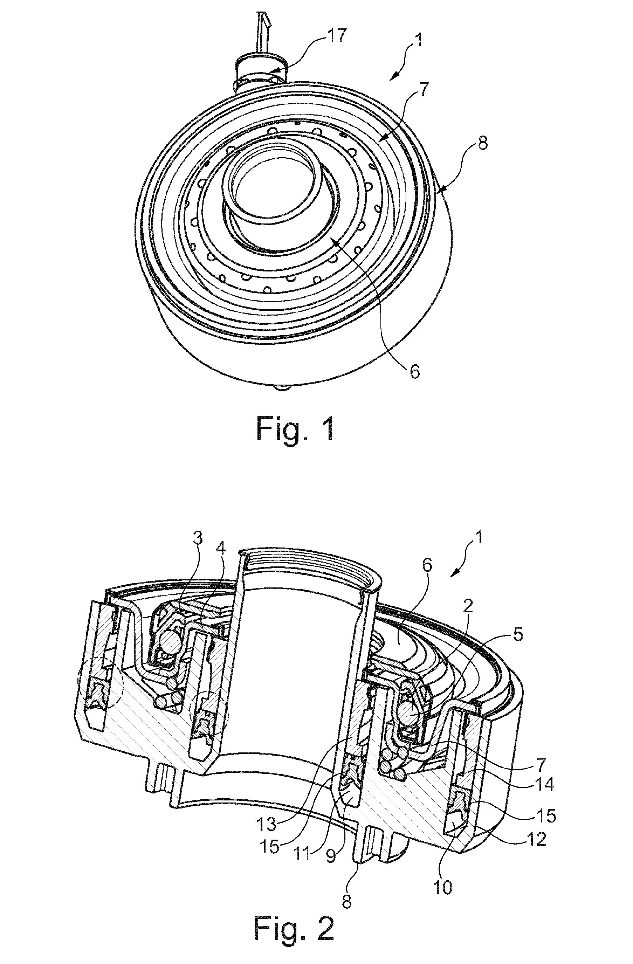

Die Fig. 1 bis 4 zeigen in verschiedenen Darstellungen ein erstes Ausführungsbeispiel einer erfindungsgemäßen Ausrückvorrichtung 1. Die Ausrückvorrichtung 1 weist ein axial verlagerbares Ausrücklager 2 auf, welches insbesondere der Beaufschlagung eines Betätigungselements einer Kupplung dient. Durch die axiale Verlagerung des Ausrücklagers 2 kann eine Kupplung ein- bzw. ausgerückt werden. Dazu weist das Ausrücklager 2 einen ersten Lagerring 3 und einen zweiten Lagerring 4 auf. Der erste Lagerring 3 als Lageraußenring ausgebildet und der zweite Lagerring 4 ist als Lagerinnenring ausgebildet, wobei zwischen dem ersten Lagerring 3 und dem zweiten Lagerring 4 Wälzelemente 5 angeordnet sind, um den ersten Lagerring 3 relativ zum zweiten Lagerring 4 verdrehbar zu gestalten.

Der erste Lagerring 3 dient der Beaufschlagung eines Betätigungselements, beispielsweise einer Kupplung, während der zweite Lagerring 4 zur axialen Verlagerung des Ausrücklagers 2 herangezogen wird. Der erste Lagerring 3 kann von einem deckelartigen Element 6 abgedeckt werden, so dass die Betätigungselemente der Kupplung über dieses deckelartige Element 6 von dem ersten Lagerring 3 beaufschlagt werden kann.

Der zweite Lagerring 4 steht mit einem topfartigen Element 7 in formschlüssiger oder kraftschlüssiger Verbindung, so dass bei axialer Verlagerung des zweiten Lagerrings 4 auch das topfartige Element 7 axial verlagert werden kann. Das Ausrücklager 2 ist in einem Gehäuse 8 aufgenommen, innerhalb welchem das Ausrücklager 2 in axialer Richtung verlagerbar ist. Das Gehäuse 8 weist gemäß der Fig. 2 bis 4 zwei Kolben-Zylindereinheiten 9, 10 auf, welche ringförmig ausgebildet sein können, wobei die Kolben-Zylindereinheit 9 radial innerhalb der Kolben-Zylindereinheit 10 angeordnet ist. Jede der beiden Kolben-Zylindereinheiten 9, 10 weist einen Zylinder 11, 12, einen Kolben 13, 14 und ein Dichtelement 15, 16 auf. Wird im Zylinder 9 ein Druckmittel beaufschlagt, so wird der Kolben 13 in axialer Richtung verlagert, wobei der Kolben 13 an seinem einen zylinderseitigen Ende mit dem Dichtelement 15 versehen ist und an seinem gegenüberliegenden Ende den Lagerinnenring 4 beaufschlagt. Bei Verlagerung des Kolbens 13 in axialer Richtung wird der Lagerinnenring 4 in axialer Richtung verlagert, so dass das Ausrücklager 2 ebenso in axialer Richtung verlagert wird.

Zur Info: Die Elemente 2, 3 und 4 Bilden das Lager, das Element 2 ist eine Kugel bzw. eine von mehreren Kugeln im Lager.

Wird hingegen ein Druckmittel auf das Dichtelement 12 des Druckraums 10 beaufschlagt, so wird der Kolben 14 in axialer Richtung verlagert. Der Kolben 14 weist an seinem einen Ende den Träger 16 des Dichtelements 12 auf und an seinem anderen Ende steht der Kolben 14 mit dem topfartigen Element 7 in Kontakt, so dass bei axialer Verlagerung des Kolbens 14 das topfartige Element 7 axial verlagert wird, welches wiederum radial innen den zweiten Lagerring 4 übergreift und somit auch den zweiten Lagerring 3 axial verlagert.

In der Fig. 2 ist somit zu erkennen, dass das Ausrücklager 2 durch zwei unabhängige Kolben-Zylindereinheiten über die Druckräume 9 und 10 beaufschlagbar sind, so dass das Ausrücklager 2 entweder durch eine Beaufschlagung des Druckraums 9 axial verlagert wird oder durch eine Beaufschlagung des Druckraums 10.

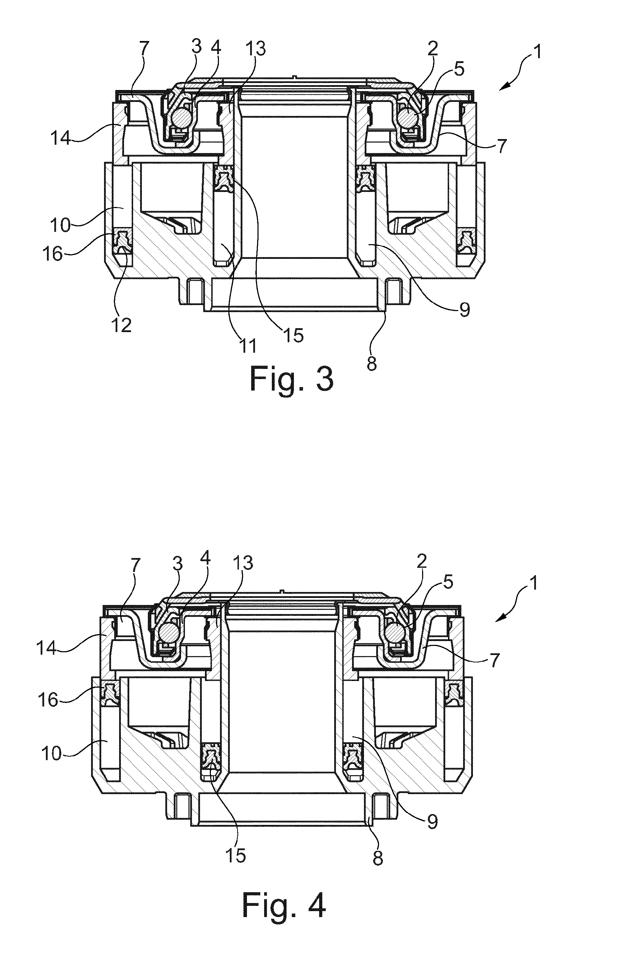

Die Fig. 3 und 4 zeigen die Anordnung der Ausrückvorrichtung gemäß Fig. 2 in zwei verschiedenen Betriebsstellungen. In Fig. 2 sind die Kolben 13, 14 bzw. die diesbezüglichen Dichtelemente 15, 16 in der unbetätigten Stellung. In Fig. 3 ist der Kolben 13 in axialer Richtung hin zum Ausrücklager 2 verlagert, da ein Druckmittel im Druckraum 9 beaufschlagt ist Achtung: Zahl 9 und 11 in Figur 3 ist der gleiche Druckraum. Gleichzeitig ist der Zylinder 12 der Kolben-Zylindereinheit 10 unbeaufschlagt, so dass die Kolben-Zylindereinheit 10 nicht zur Betätigung des Ausrücklagers beiträgt.

Es ist in Fig. 3 zu erkennen, dass das Dichtelement 15 der Kolben-Zylindereinheit 9 in axialer Richtung in Richtung auf das Ausrücklager verlagert ist und damit den Kolben 13 in Richtung auf das Ausrücklager beaufschlagen kann. Das Dichtelement 16 hingegen ist nicht in einer betätigten Stellung, so dass zwischen dem Dichtelement 16 und dem Kolben 14 keine Beaufschlagung vorliegt und der Kolben 14 lediglich verlagert ist, weil dieser an dem topfartigen Element 7 angebunden ist.

Die Fig. 4 zeigt die entsprechende alternative Betriebsstellung, in welcher die Kolben-Zylindereinheit 10 druckmittelbeaufschlagt ist, während die Kolben-Zylindereinheit 9 nicht druckmittelbeaufschlagt ist. Das Dichtelement 16 ist in axialer Richtung verlagert, während das Dichtelement 15 in axialer Richtung nicht verlagert ist. Entsprechend beaufschlagt das Dichtelement 16 den Kolben 14, während das Dichtelement 15 den Kolben 13 nicht beaufschlagt. Das Ausrücklager ist ausgerückt, weil die Kolben-Zylindereinheit 10 druckmittelbeaufschlagt ist.

Die Fig. 1 bis 4 zeigen somit eine Ausrückvorrichtung 1 zur Betätigung eines Ausrücklagers 2 mit einer ersten Kolben-Zylindereinheit 9 und einer zweiten Kolben-Zylindereinheit 10, die unabhängig voneinander über jeweils vorgesehene Druckmittelanschlüsse 17 beaufschlagbar sind. Die Kolben-Zylindereinheiten 9, 10 sind ringförmig ausgebildete Kolben-Zylindereinheiten 9, 10, die radial ineinander angeordnet sind. Die Kolben-Zylindereinheiten 9, 10 beaufschlagen dabei den zweiten Lagerring 4 unmittelbar oder über ein Zwischenelement, welches als topfartiges Element 7 ausgebildet ist.

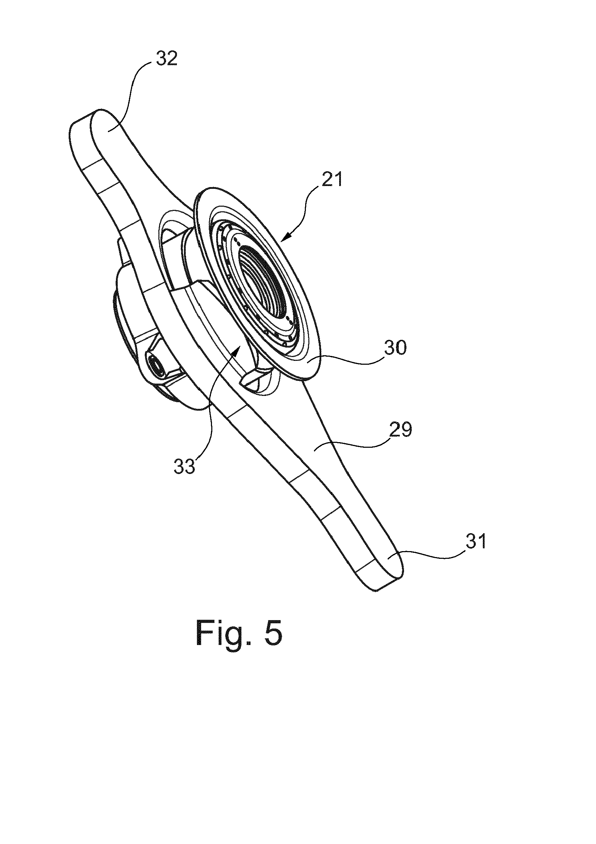

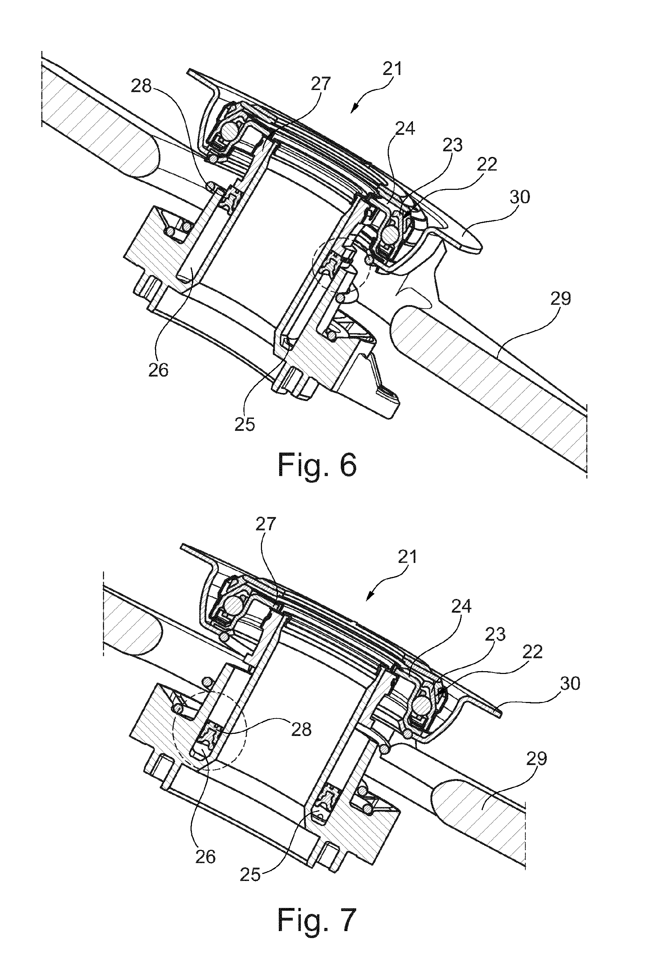

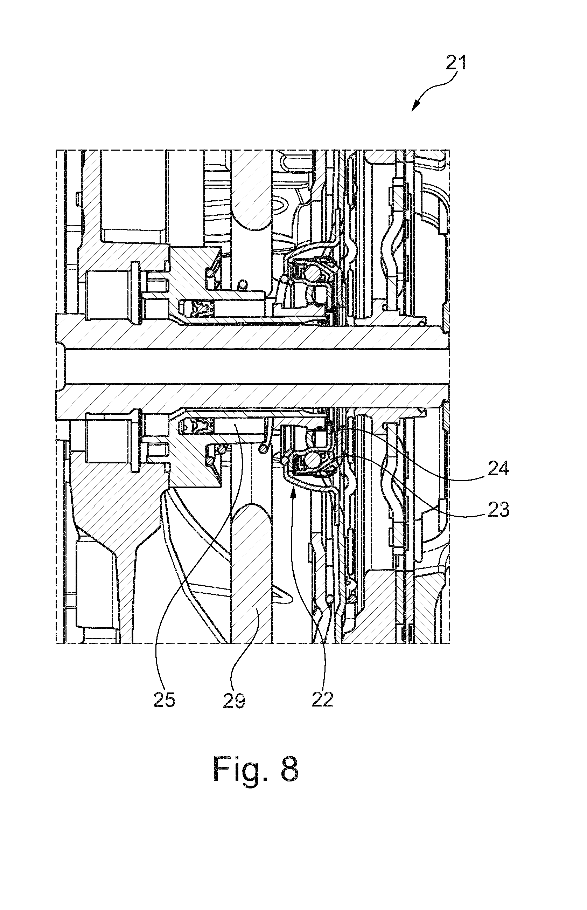

Die Fig. 5 bis 8 zeigen ein zweites Ausführungsbeispiel einer Ausrückvorrichtung 21, bei welcher das Ausrücklager 22 mit einem ersten Lagerring 23 und einem zweiten Lagerring 24 versehen ist, wobei als erstes Betätigungsmittel eine Kolben-Zylindereinheit 25 vorgesehen ist, welche einen Zylinder 26 und einen darin verlagerbaren Kolben 27 und ein Dichtelement 28 aufweist. Ist der Zylinder 26 druckmittelbeaufschlagt, so verlagert sich das Dichtelement 28 gemäß Fig. 6 und der Kolben 27 wird beaufschlagt. Ist der Zylinder 26 nicht beaufschlagt, so ist auch das Dichtelement 28 gemäß Fig. 7 nicht verlagert, so dass zwischen dem Dichtelement und dem Kolben 27 keine Verbindung bestehen muss.

Gleichzeitig kann über eine Anordnung eines verschwenkbaren Hebels das Ausrücklager 22 über ein topfartiges Element 30 betätigbar bzw. verlagerbar sein, so dass unabhängig von der Beaufschlagung der Kolben-Zylindereinheit 25 das Ausrücklager mittels des Hebels 29 verlagerbar ist. Der Hebel 29 ist dabei ein einarmiger Hebel, der in einem Endbereich 32 in einem Gehäuse, beispielsweise einer Getriebeglocke gelagert sein kann, während er in seinem anderen Endbereich 31 mittels eines Aktuators betätigbar ist. Dadurch verschwenkt sich der Hebel 29 und beaufschlagt mittels seiner seitlichen Zungen 33 das topfartige Element 30 und beaufschlagt das Ausrücklager zur Betätigung der Kupplung.

Die Fig. 5 bis 8 zeigen somit eine Ausrückvorrichtung 21 mit einem ersten Betätigungsmittel, welches eine Kolben-Zylindereinheit umfasst zur Druckmittelbeaufschlagung des Ausrücklagers, wobei weiterhin ein zweites Betätigungsmittel vorgesehen ist, das als Hebelanordnung ausgebildet ist zur mechanischen Beaufschlagung des Ausrücklagers.

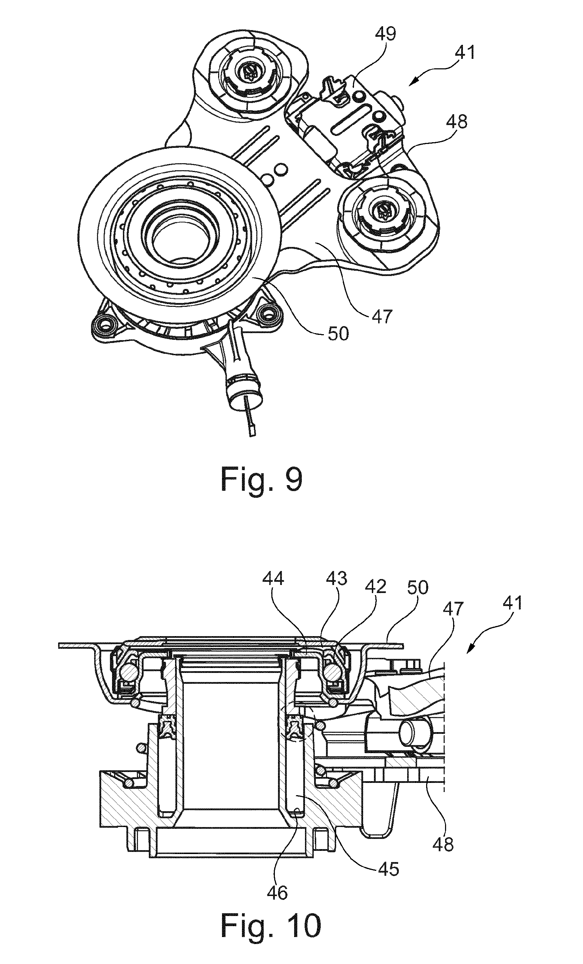

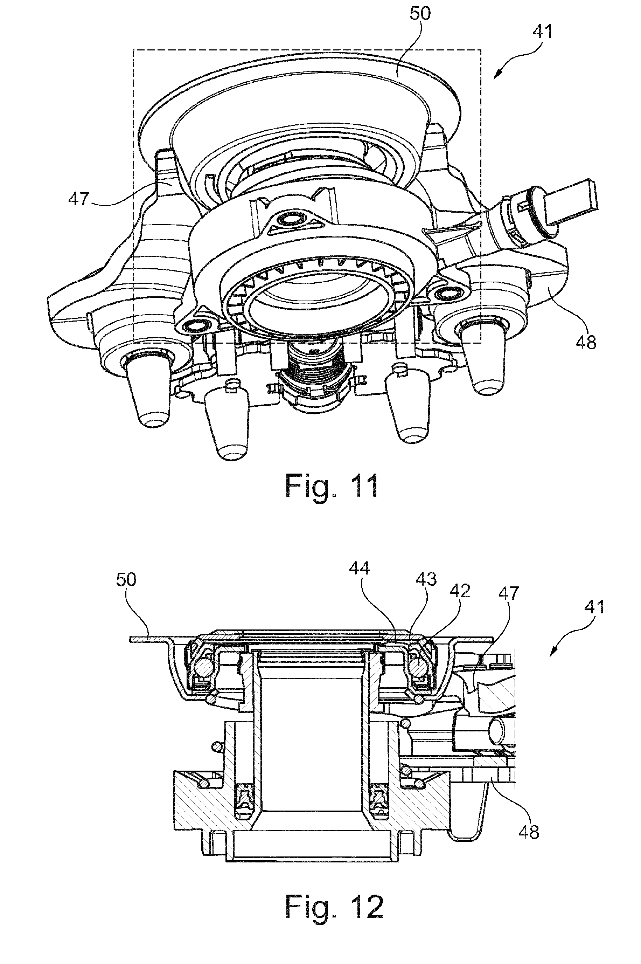

Die Fig. 9 bis 12 zeigen ein weiteres Ausführungsbeispiel einer Ausrückvorrichtung 41 mit einem Ausrücklager 42 mit einem ersten Lagerring 43 und einem zweiten Lagerring 44. Zur Beaufschlagung ist ein erstes Betätigungsmittel als Kolben-Zylindereinheit 46 vorgesehen, welche gemäß der Kolben-Zylindereinheit 25 der Fig. 5 bis 8 ausgebildet ist. Als zweites Betätigungsmittel ist eine Hebelanordnung 47 vorgesehen, welche als integrierte Hebelanordnung auf einer Plattform vorgesehen ist, wobei die Plattform einen Betätigungsaktuator 49 umfasst, welcher den Hebel 47 betätigt. Der Hebel steht dabei mit dem topfartigen Element 50 in Wirkverbindung, so dass bei Verschwenkung des Hebels 47 das topfartige Element und damit das Ausrücklager axial verlagerbar sind.

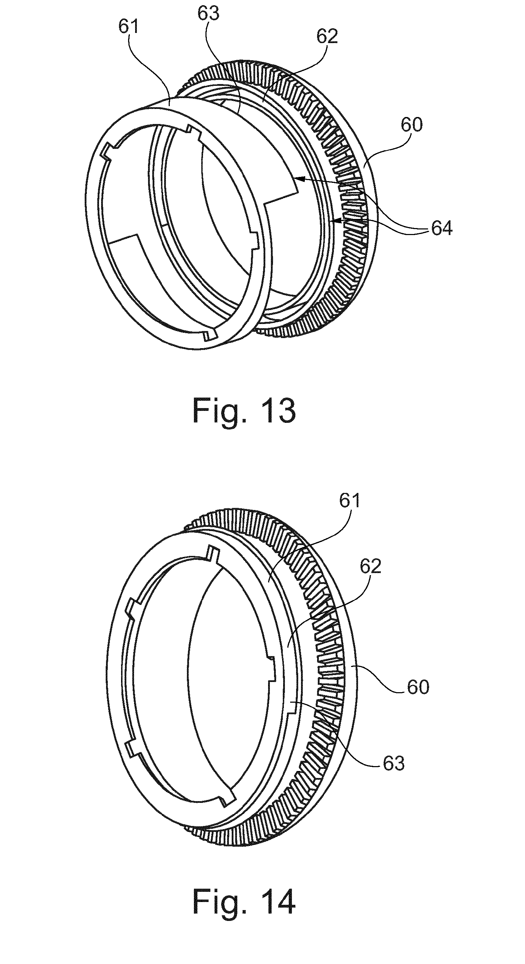

Die Fig. 13 und 14 sowie 18 und 19 zeigen Rampenelemente, die relativ zueinander verdrehbar sind, wobei die Rampenelemente über schräglaufende Rampen miteinander verbunden sind, so dass bei Relativverdrehung der Rampenelemente eine axiale Verlagerung der Rampenelemente erfolgt. Die Fig. 13 zeigt zwei Rampenelemente 60, 61, die ringförmig ausgebildet sind. Dabei weist das Rampenelement 60 einen Ringspalt 62 auf, in den die Rampenringe 63 des Rampenelements 61 eingreifen können. Beide Elemente, der Rampenring 63 als auch der Ringspalt 62 weisen Rampen 64 auf, so dass bei Verdrehung des Rampenrings im Ringspalt 62 eine axiale Verlagerung des Rampenelements 61 relativ zum Rampenelement 62 erfolgt. Die Fig. 14 zeigt die Anordnung des Rampenelements 61 mit dem Rampenring 63 im Ringspalt 62 des Rampenelements 60, wobei keine Relativverdrehung vorliegt, so dass auch keine axiale Verlagerung des Rampenelements 61 relativ zum Rampenelement 60 vorliegt.

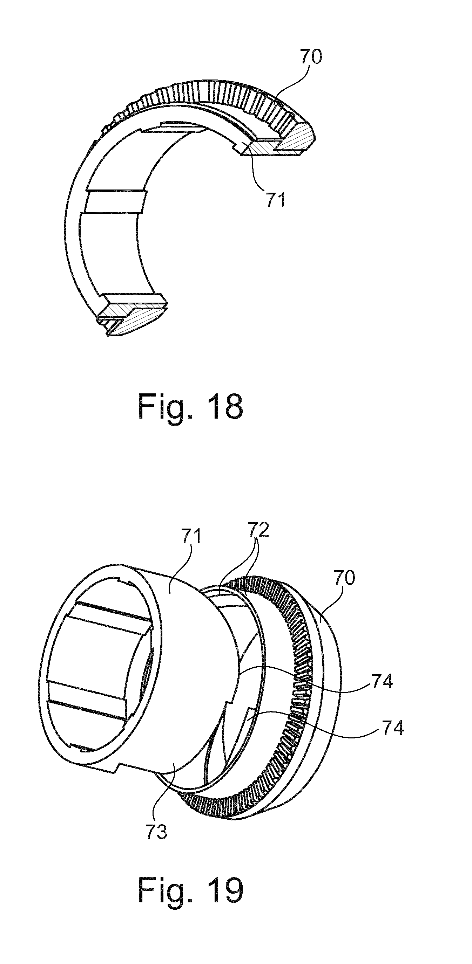

Die Fig. 18 und 19 zeigen ein weiteres Ausführungsbeispiel zweier Rampenelemente 70, 71, wobei der Rampenring 73 des Rampenelements 71 in das Rampenelement 70 eingreift und dort mit Rampen des ersten Rampenelements zusammenwirkt. Die Rampen sind dabei am Umfang des Rampenrings des ersten Rampenelements bzw. des zweiten Rampenelements angeordnet, so dass die Rampen relativ zueinander gleiten können und eine axiale Verlagerung des ersten Rampenelements relativ zum zweiten Rampenelement bzw. umgekehrt bewirken.

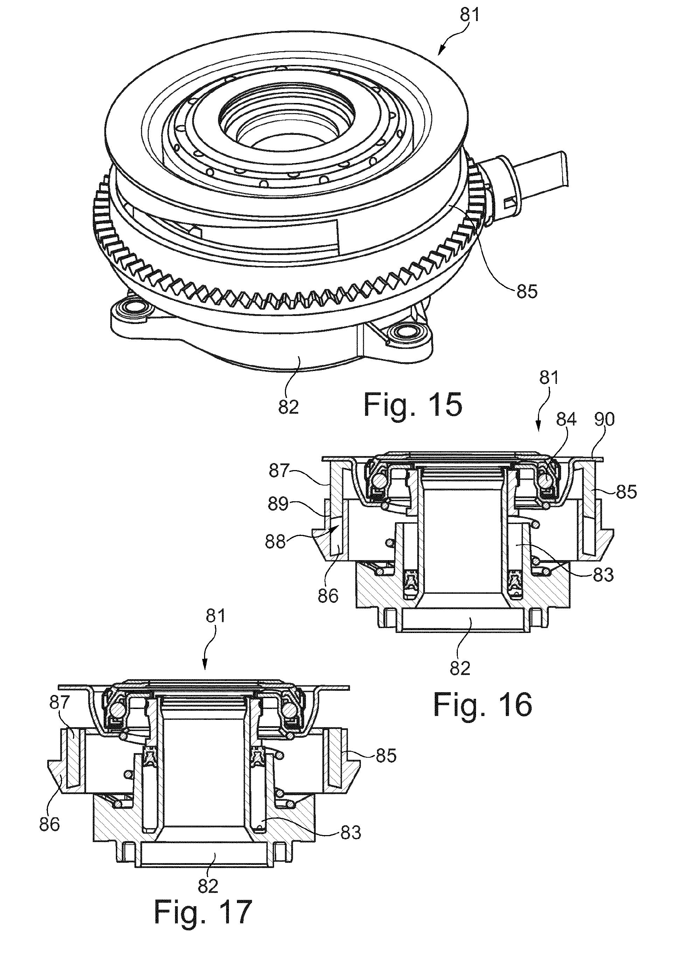

Die Fig. 15 bis 17 zeigen ein weiteres Ausführungsbeispiel einer Ausrückvorrichtung 81 mit einem Gehäuse 82 und einer Kolben-Zylindereinheit 83 zur Beaufschlagung des Ausrücklagers 84. Die Kolben-Zylindereinheit 83 ist entsprechend den Ausführungsbeispielen der Fig. 5 bis 8 bzw. 10 oder 12. Die diesbezügliche Beschreibung ist auch für die Kolben-Zylindereinheit 83 gültig. Weiterhin ist im Ausführungsbeispiel der Fig. 15 bis 17 ein Betätigungsmittel als Rampenvorrichtung 85 vorgesehen, welche zwei relativ zueinander verdrehbar angeordnete Rampenelemente 86, 87 vorsieht. Die Rampenelemente sind relativ zueinander verdrehbar, wobei sich die jeweiligen Rampen 88, 89 aneinander gleitend abstützen, wobei durch Verdrehung der Rampen der Rampenelemente die Rampenelemente 86, 87 in axialer Richtung verlagerbar sind. So steht das Rampenelement 87 mit dem topfartigen Element 90 in Verbindung, so dass durch Ausfahren des Rampenelements 87 das topfartige Element 90 beaufschlagbar ist, um das Ausrücklager 84 zu beaufschlagen.

Die Fig. 15 bis 17 zeigen somit eine Ausrückvorrichtung mit einer Kolben-Zylindereinheit als erstes Betätigungsmittel und mit einer Rampenvorrichtung als zweites Betätigungsmittel. Die Rampenelemente können dabei beispielsweise mittels eines Aktuators relativ zueinander verdrehbar sein, um das Ausrücklager der Ausrückvorrichtung zu betätigen.

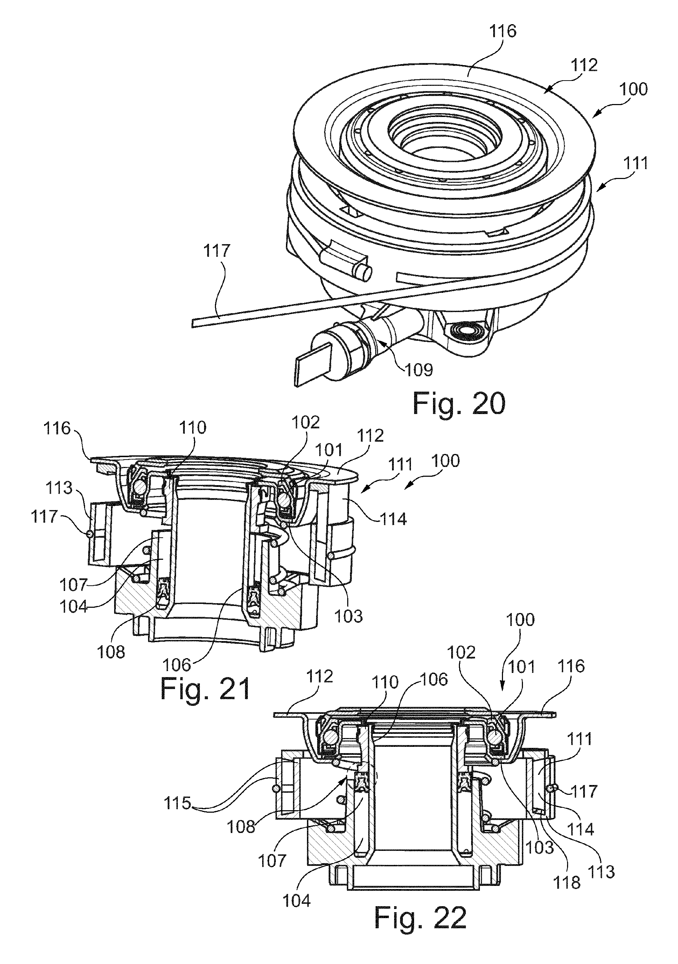

Die Figuren 20 bis 22 zeigen ein weiteres Ausführungsbeispiel einer erfindungsgemäßen Ausrückvorrichtung 100 mit einem Ausrücklager 101 mit einem ersten Lagerring 102 und mit einem zweiten Lagerring 103.

Zur Beaufschlagung des zweiten Lagerrings 103 ist ein erstes Betätigungsmittel 104 als Kolben-Zylindereinheit 105 vorgesehen, welches radial außen an einer Hülse 106 angeordnet ist. Die Kolben-Zylindereinheit 105 weist einen ringförmigen Zylinderraum 107 und einen ringförmigen Kolben 108 auf, welcher in axialer Richtung in dem Zylinderraum 107 gleiten kann. Der Zylinderraum 107 ist mittels eines Druckmittels, wie eines Hydraulikfluids, beaufschlagbar, wobei der Zylinderrum 107 über den Fluidanschluss 109 mit einer Fluidleitung verbindbar ist.

In Figur 21 ist zu erkennen, dass der Kolben 108 in einer zurückgezogenen Stellung im Zylinderraum 107 angeordnet ist und den zweiten Lagerring 103 über die verlagerbare Hülse 110 nicht beaufschlagt.

In Figur 22 ist zu erkennen, dass der Kolben 108 in einer vorgezogenen Stellung im Zylinderraum 107 angeordnet ist und den zweiten Lagerring 103 über die verlagerbare Hülse 110 beaufschlagt. Dadurch wird das Ausrücklager zum Betätigen der Kupplung beaufschlagt. Der Kolben 108 und die Hülse 110 sind dabei bevorzugt nicht miteinander fest verbunden, sondern sie sind relativ zueinander verlagerbar. So kann der Kolben 108 sich auch ohne Verlagerung der Hülse 110 relativ zu der Hülse 110 bewegen.

Als zweites Betätigungsmittel ist eine Rampenanordnung 111 vorgesehen, welche an einem topfartigen Element 112, wie eine Schale, in axialer Richtung angreift, welches wiederum an dem zweiten Lagerring 103 angelenkt ist.

Die Rampenvorrichtung besteht aus zwei ringförmigen Elementen 113, 114, welche relativ zueinander verdrehbar sind, wobei die ringförmigen Elemente Rampen 120 an ihrem Umfang oder an zumindest einem ihrer Umfänge verteilt aufweisen, welche sich aneinander abstützen, so dass bei einer Relativverdrehung der Rampenelemente 113, 114 eine axiale Verlagerung der Rampenelemente 113, 114 relativ zueinander resultiert.

Die Rampenelemente 113, 114 sind dabei derart ausgebildet und angeordnet, dass das erste Rampenelement als im Wesentlichen U-förmiges Element mit zwei beabstandeten Schenkeln 115 ausgebildet ist und das zweite Rampenelement 114 radial zwischen den Schenkeln 115 angeordnet ist.

Dabei stützt sich das Rampenelement 114 im ausgefahrenen Zustand an dem topfartigen Element 112 in axialer Richtung ab und betätigt über das topfartige Element 112 den zweiten Lagerring.

Im gezeigten Ausführungsbeispiel ist das topfartige Element 112 als eine Art Schale um das Ausrücklager 101 herum angeordnet, wobei die Schale einen kreisrunden Überstand 116 aufweist, an welchem sich das Rampenelement 114 abstützt. Die Verbindung zwischen dem topfartigen Element 112 im Bereich des Überstands 116 und dem Rampenelement 114 ist dabei bevorzugt ohne feste Verbindung ausgebildet, so dass das topfartige Element 112 auch ohne das Rampenelement verlagerbar ist, wenn die Verlagerung des Ausrücklagers über das erste Betätigungselement erfolgt.

Wird das erste Betätigungselement als Kolben-Zylindereinheit manuell durch ein Pedal angesteuert und das zweite Betätigungselement automatisiert durch einen Aktuator, so kann dadurch auch ein Übersteuern des automatisierten Systems durch das manuelle System durchgeführt werden.

Um die Betätigungsbewegung der Rampenvorrichtung als zweites Betätigungselement durchzuführen ist eine Seilzugvorrichtung vorgesehen, welche ein Seil 117 umfasst, welches auf Zug beaufschlagbar ist. Dabei windet sich das Seil 117 um das erste Rampenelement 113 an dessen Umfang. Durch Zug am Seil 117 wird das erste Rampenelement 113 in Umfangsrichtung relativ zu dem feststehenden zweiten Rampenelement 114 verdreht, wodurch die Rampen 120 der Rampenelemente 113, 114 aneinander entlanggleiten und das zweite Rampenelement 114 relativ zum ersten Rampenelement 113 in axialer Richtung ausgefahren wird. Dabei wird das erste Rampenelement als ein äußerer Ring mittels des Seils des Seilzugs oder alternativ über einen Riemen oder ähnliches angetrieben und um seine Mittelachse verdreht. Der Riemen kann beispielsweise durch einen Elektromotor sowohl innerhalb als auch außerhalb einer Kupplungsglocke angeordnet angetrieben werden. Ein Seilzug kann alternativ derart ausgebildet sein, dass ein Seil beispielsweise mittels einer Art Spindel oder Winde auf- und abgewickelt werden kann, um die Rampenvorrichtungen relativ zueinander zu verdrehen und das Ausrücklager zu beaufschlagen und zu verfahren.

Durch die Drehgeschwindigkeit des eingesetzten Antriebs wird die Verfahrgeschwindigkeit der Rampenelemente bestimmt bzw. gesteuert. Ein Seilzug bietet auch den Vorteil, dass der Antriebsmotor des Seilzugs im Fahrzeug an einem ausgewählten Platz verbaut werden kann, wobei das verwendete Seil über Umlenkrollen durch das Fahrzeug geführt werden kann. Für den Antriebsmotor des Seilzugs kann dabei ein Bauraum gewählt werden, welcher nicht auf den unmittelbaren Bauraum in und um die Kupplungsglocke angewiesen ist.

Das äußere Rampenelement 113 weist eine Nut 118 zwischen den beiden Schenkeln 115 auf, in welcher das innere Rampenelement 114 aufgenommen ist. In der Nut 118 sind auch die Rampen 120 angeordnet, auf welchen das innere Rampenelement 114, das ebenfalls entgegengesetzt ausgerichtete Rampen 120 besitzt, durch die Drehbewegung in axialer Richtung ausfährt. Hierfür weist das innere Rampenelement 114 eine axiale Führung auf, um am Mitdrehen mit dem äußeren Rampenelement gehindert zu sein.

Das innere Rampenelement drückt beim Ausfahren auf die Druckschale 116 bzw. das topfartige Element 112 und verlagert dadurch das Ausrücklager, wodurch die Kupplung betätigt wird.

Die Befestigung des Seils 117 erfolgt über eine formschlüssige Verbindung 119, wobei das Seil am äußeren Umfang des ersten Rampenelements 113 in einer Nut 121 verläuft.

Bei der erfindungsgemäßen Vorrichtung ist die Betätigungsgeschwindigkeit, also die Drehgeschwindigkeit des äußeren Rampenelements bevorzugt regelbar, um ein sanftes Öffnen und Schließen der Kupplung trotz unterschiedlicher Fahrsituationen und -widerstände zu ermöglichen.

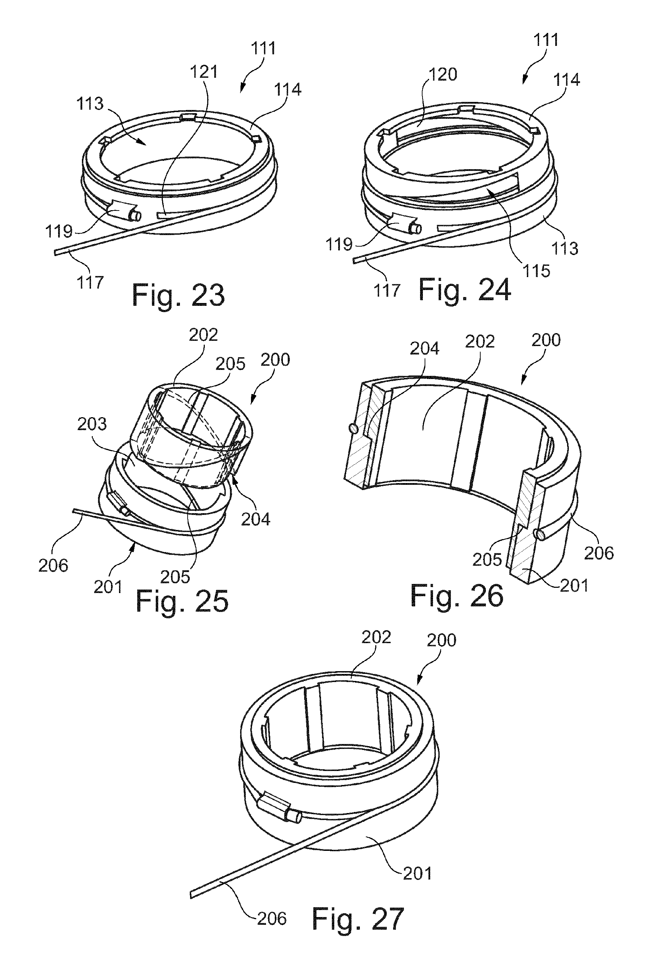

Die Figuren 25 bis 27 zeigen ein weiteres Ausführungsbeispiel einer Rampenvorrichtung 200, wobei die Rampenvorrichtung 200 aus zwei hohlzylindrischen Elementen 201, 202 besteht, die jeweils an ihrer Innenfläche 203 bzw. an ihrer Außenfläche 204 Rampen 205 aufweisen, welche sich aneinander abstützen, so dass bei Verdrehung der beiden Elemente relativ zueinander die beiden Elemente axial zueinander verlagert werden. Dadurch fährt der Innenring 202 aus dem Außenring 201 axial heraus, wenn der Außenring 201 mittels des Seils 206 der Seilzugvorrichtung verdreht wird.

Alternativ zu den obigen Ausführungsbeispielen ist es möglich, wenn nicht der innere, sondern der äußere Ring axial verfahren wird. Durch die Flexibilität des Seilzuges kann der Antrieb in Verfahrrichtung mit verfahren. Der innere Ring könnte somit fest mit dem Gehäuse verbunden werden, wodurch die axiale Führung entfallen könnte. Der innere Ring könnte somit auch ganz weg fallen und die Rampen des inneren Ringes könnten direkt in das Gehäuse der Ausrückvorrichtung integriert werden. Allerdings wäre dann bei dieser Ausführungsform der äußere sich drehende Ring gegenüber der Druckschale drehbar gelagert. Trifft der äußere Ring, der ja durch seine Drehbewegung verfährt, auf die Schale, beginnen die Elemente gegeneinander zu reiben, wodurch sich ein Drehmoment auf den fest mit dem Gehäuse verbundenen Teil des Lagers bzw. des Gehäuses. Dies erfolgt dann sowohl beim Ein- als auch bei Ausrücken der Kupplung.

### Bezugszeichenliste

- 1: Ausrückvorrichtung
- 2: Ausrücklager
- 3: erster Lagerring
- 4: zweiter Lagerring
- 5: Wälzelement
- 6: deckelartiges Element
- 7: topfartiges Element
- 8: Gehäuse
- 9: Druckraum der Kolben-Zylindereinheit
- 10: Druckraum der Kolben-Zylindereinheit
- 11: Dichtelement, Zylinder
- 12: Druckraum oder Dichtelement
- 13: Kolben
- 14: Kolben
- 15: Dichtelementträger (Dichtringträger)
- 16: Dichtelementträger (Dichtringträger)
- 17: Druckmittelanschluss / Konnektor weiblich/männlich

- 21: Ausrückvorrichtung
- 22: Ausrücklager
- 23: erster Lagerring
- 24: zweiter Lagerring
- 25: Druckraum
- 26: Druckraum für Kolben
- 27: Kolben
- 28: Dichtelement
- 29: Hebel
- 30: topfartiges Element
- 31: Endbereich
- 32: Endbereich
- 33: Zungen / Lastangriffspunkte

- 41: Ausrückvorrichtung
- 42: Ausrücklager
- 43: erster Lagerring
- 44: zweiter Lagerring
- 45: Druckraum für Betätigungsmittel
- 46: Kolben-Zylindereinheit
- 47: Hebelanordnung
- 48: Plattform
- 49: Aktuator
- 50: topfartiges Element

- 60: Rampenkolben
- 61: Rampenkolben
- 62: Ringspalt
- 63: Rampe
- 64: Rampe

- 70: Rampenelement
- 71: Rampenelement
- 72: Rampenring
- 73: Rampenring
- 74: Rampe

- 81: Ausrückvorrichtung
- 82: Gehäuse
- 83: Druckraum
- 84: Ausrücklager
- 85: Rampenvorrichtung
- 86: Rampenelement
- 87: Rampenelement
- 88: Rampe
- 89: Rampe
- 90: topfartiges Element

- 100: Ausrückvorrichtung
- 101: Ausrücklager
- 102: Lagerring
- 103: Lagerring
- 104: Betätigungsmittel
- 105: Kolben-Zylindereinheit
- 106: Hülse
- 107: Zylinderraum
- 108: Kolben
- 109: Fluidanschluss
- 110: Hülse
- 111: Rampenanordnung
- 112: topfartiges Element
- 113: Element
- 114: Element
- 115: Schenkel
- 116: Überstand
- 117: Seil
- 118: Nut
- 119: Verbindung
- 120: Rampe
- 121: Nut

- 200: Rampenvorrichtung
- 201: Element
- 202: Element
- 203: Innenfläche
- 204: Außenfläche
- 205: Rampen
- 206: Seil

## Patentansprüche

1. Ausrückvorrichtung mit einem axial verlagerbaren Ausrücklager insbesondere zur Beaufschlagung eines Betätigungselements einer Kupplung, wobei das Ausrücklager einen ersten Lagerring und einen zweiten Lagerring aufweist, wobei der erste Lagerring zur Beaufschlagung des Betätigungselements dient und der zweite Lagerring zur axialen Verlagerung des Ausrücklagers von einem ersten Betätigungsmittel und von einem zweiten Betätigungsmittel beaufschlagbar ist, wobei die beiden Betätigungsmittel unabhängig voneinander ansteuerbar sind.

2. Ausrückvorrichtung nach Anspruch 1, **dadurch gekennzeichnet, dass** das erste Betätigungsmittel eine erste Kolben-Zylindereinheit ist, welche einen Zylinder aufweist, in welchem ein axial verlagerbarer Kolben aufgenommen ist, wobei der zweite Lagerring mittels des Kolbens der ersten Kolben-Zylindereinheit beaufschlagbar ist.

3. Ausrückvorrichtung nach Anspruch 1 oder 2, **dadurch gekennzeichnet, dass** das zweite Betätigungsmittel eine zweite Kolben-Zylindereinheit ist, welche einen Zylinder aufweist, in welchem ein axial verlagerbarer Kolben aufgenommen ist, wobei der zweite Lagerring mittels des Kolbens der zweiten Kolben-Zylindereinheit beaufschlagbar ist.

4. Ausrückvorrichtung nach Anspruch 2 oder 3, **dadurch gekennzeichnet, dass** die erste Kolben-Zylindereinheit und/oder die zweite Kolben-Zylindereinheit eine ringartige Kolben-Zylindereinheit ist, wobei der Zylinder und der im Zylinder angeordnete Kolben ringförmig ausgebildet sind.

5. Ausrückvorrichtung nach Anspruch 4, **dadurch gekennzeichnet, dass** die erste Kolben-Zylindereinheit radial innerhalb oder radial außerhalb der zweiten Kolben-Zylindereinheit angeordnet ist.

6. Ausrückvorrichtung nach Anspruch 1 oder 2, **dadurch gekennzeichnet, dass** das zweite Betätigungsmittel einen verschwenkbaren Hebel aufweist, welcher den zweiten Lagerring beaufschlagt.

7. Ausrückvorrichtung nach Anspruch 6, **dadurch gekennzeichnet, dass** der Hebel als einarmiger Hebel ausgebildet ist, wobei der Beaufschlagungsbereich zur Beaufschlagung des zweiten Lagerrings zwischen einem ersten Endbereich des Hebels und einem zweiten Endbereich des Hebels angeordnet ist, wobei der erste Endbereich der Lagerung des Hebels dient und der zweite Endbereich der Betätigung des Hebels mittels eines Aktuators dient.

8. Ausrückvorrichtung nach Anspruch 6, **dadurch gekennzeichnet, dass** der Hebel als zweiarmiger Hebel ausgebildet ist, wobei der Beaufschlagungsbereich zur Beaufschlagung des zweiten Lagerrings an einem ersten Endbereich des Hebels angeordnet ist und ein zweiter Endbereich des Hebels vorgesehen ist, welcher der Betätigung des Hebels mittels eines Aktuators dient, wobei ein Bereich zwischen dem ersten Endbereich und dem zweiten Endbereich der Lagerung des Hebels dient.

9. Ausrückvorrichtung nach einem der vorhergehenden Ansprüche, **dadurch gekennzeichnet, dass** die Lagerung des Hebels auf einer Plattform vorgenommen ist, welche mit dem Zylinder der ersten Kolben-Zylindereinheit verbunden ist.

10. Ausrückvorrichtung nach Anspruch 1 oder 2, **dadurch gekennzeichnet, dass** das zweite Betätigungsmittel eine Rampenanordnung mit zwei relativ zueinander verdrehbaren Rampenelementen aufweist, wobei bei Relativverdrehung der Rampenelemente eines der Rampenelemente in axialer Richtung verlagerbar ist zur Beaufschlagung des zweiten Lagerrings.

11. Ausrückvorrichtung nach Anspruch 10, **dadurch gekennzeichnet, dass** die Rampenanordnung mit den beiden Rampenelementen ringartig ausgebildet ist.

12. Ausrückvorrichtung nach Anspruch 11, **dadurch gekennzeichnet, dass** die erste Kolben-Zylindereinheit radial innerhalb oder radial außerhalb der Rampenanordnung angeordnet ist.

13. Ausrückvorrichtung nach einem der Ansprüche 10 oder 11, **dadurch gekennzeichnet, dass** ein erstes Rampenelement und ein zweites Rampenelement vorgesehen sind, wobei eines der Rampenelemente U-förmig im Schnitt ausgebildet ist mit zwei beabstandeten Schenkeln, wobei das andere Rampenelement in radialer Richtung zwischen den Schenkeln angeordnet ist.

14. Ausrückvorrichtung nach einem der Ansprüche 10 oder 11, **dadurch gekennzeichnet, dass** ein erstes Rampenelement und ein zweites Rampenelement vorgesehen sind, wobei die Rampenelemente hohlzylindrisch ausgebildet sind und ineinander angeordnet sind, so dass sie an ihrer Innenfläche und Außenfläche Rampen aufweisen, welche sich aneinander abstützen.

15. Ausrückvorrichtung nach einem der vorhergehenden Ansprüche 10 bis 14, **dadurch gekennzeichnet, dass** eines der Rampenelemente mittels eines Seiles und eines Seilzugaktuators verdrehbar ist, wobei das Seil sich am Außenumfang des Seils anlegt und sich um das Rampenelement windet.
